(19) Europäisches Patentamt / European Patent Office / Office européen des brevets

(11) **EP 2 246 175 B1**

(12) **EUROPEAN PATENT SPECIFICATION**

(45) Date of publication and mention
of the grant of the patent:
**17.04.2013 Bulletin 2013/16**

(51) Int Cl.:
**B29C 49/00** *(2006.01)*          **C08J 9/12** *(2006.01)*
**B29C 49/04** *(2006.01)*          **B29C 49/22** *(2006.01)*

(21) Application number: **10004612.7**

(22) Date of filing: **03.05.2010**

(54) **Polyethylene-based resin foamed blow molded article**

Geschäumter, blasgeformter Gegenstand aus Kunststoff auf Polyethylenbasis

Article moulé par soufflage en résine de mousse à base de polyéthylène

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **01.05.2009 JP 2009111947**

(43) Date of publication of application:
**03.11.2010 Bulletin 2010/44**

(73) Proprietor: **JSP CORPORATION
Tokyo 100-0005 (JP)**

(72) Inventors:
• **Tokiwa, Tomoo**
  **Kanuma-shi, Tochigi 322-0014 (JP)**
• **Tsuchida, Shohei**
  **Kanuma-shi, Tochigi 322-0014 (JP)**
• **Naito, Masato**
  **Kanuma-shi, Tochigi 322-0014 (JP)**

(74) Representative: **Müller-Gerbes Wagner Albiger
Patentanwälte
Friedrich-Breuer-Strasse 72-78
53225 Bonn (DE)**

(56) References cited:
**EP-A1- 1 449 634     US-A- 4 462 947**

**Description**

BACKGROUND OF THE INVENTION

1. Field of the Invention

The present invention relates to a polyethylene resin foamed blow molded article (hereinafter, may also be referred to as "foamed blow molded article"), and more particularly, the invention relates to a polyethylene resin foamed blow molded article having a high expansion ratio, the article containing a high-density polyethylene resin.

2. Description of the Related Art

It is generally known that foamed blow molded article have been conventionally obtained by a process of extruding an foamable resin melt containing a physical blowing agent through a die to form an expanded and foamed parison, subsequently inserting the foamed parison in a mold, and foamed blow molding the parison.

EP 1 449 634 discloses an article in accordance with the pre-amble of claim 1. Japanese Patent No. 4084209 discloses that an foamed blow molded article is obtained by extruding an foamable resin melt containing a physical blowing agent through a die to form a foamed parison, subsequently inserting the foamed parison in a mold, and foamed blow molding the foamed parison, and that such a foamed blow molded article is obtained by using a base resin prepared by mixing a high-density polyethylene resin and a low-density polyethylene resin at a particular ratio.

Japanese Patent Application National Publication (Laid-Open) No. 2001-527106 discloses a foamed blow molded article composed from a high-density polyethylene, having a low expansion ratio of about 1.3.

In recent years, polyethylene resins having improved foamability, properties of foam and the like, have been proposed in Japanese Patent Application Laid-Open (JP-A) No. 2006-96910 and 2008-222818. JP-A No. 2006-96910 discloses that a foamed molded article is obtained by using a polyethylene resin having increased melt tension, which is produced by introducing a specific number of long-chain branches into a high-density polyethylene. JP-A No. 2008-222818 discloses a high-density polyethylene resin foam having high heat insulation properties as well as heat resistance, brittleness at low-temperature and recyclability, which foam is produced using an uncrosslinked high-density polyethylene resin having a melt tension of 80 mN or more at 160°C and using carbon dioxide gas as a blowing agent, by extruding the polyethylene melt at a resin extrusion temperature in the range of 9 to 7°C below the melting point of the resin.

There have been reported various techniques for improving the moldability of a polyethylene resin and obtaining a foam as described above. However, in general, in the case of carrying out foam molding, high-density polyethylene resins have a problem that the resins have poor moldability because the resins have high degrees of crystallinity, and the melt tension of the resins changes greatly with a slight change in temperature, so that the temperature range capable of foamed blow molding is very narrow. As a solution for such a problem of moldability of high-density polyethylene resins, there have been disclosed the technologies described in JP-A No. 2006-96910 and JP-A No. 2008-222818. However, in the case of using a high-density polyethylene resin and carrying out foamed blow molding, consideration should be given not only to the result of obtaining a foam by extrusion foaming, but also to drawdown, collapse of cells, and the like. Since foamed blow molding is carried out by blow molding a foamed parison in a softened state, the external appearance, heat insulation property, moldability and the like are prone to be insufficient, and it is also difficult to adjust the expansion ratio, thickness, diameter of the cells or the like over a wide range. Accordingly, in the foamed blow molding, it is more difficult to obtain a high-density polyethylene resin foamed blow molded article than to obtain a conventional foam by extrusion foaming.

Furthermore, high-density polyethylene resins have a larger endothermic value as compared with conventional polypropylene resins. For this reason, since foamed blow molding is greatly affected by crystallinity, it is not feasible to control foamed blow molding only by improving the melt tension or fluidity of the resin, and a foamed blow molded article with a high expansion ratio cannot be obtained.

Therefore, in order to obtain a foamed blow molded article of a polyethylene resin containing a high-density polyethylene resin, it has been necessary to improve moldability of the resin by incorporating a significant amount of low-density polyethylene resin. The method of Japanese Patent No. 4084209 can give a foamed blow molded article composed of high-density polyethylene resin and low-density polyethylene resin at a particular ratio. However, there are still problems in obtaining a thin-walled foamed blow molded article at a high expansion ratio. Furthermore, there are problems with the resulting foamed blow molded article in terms of heat resistance or rigidity.

Furthermore, Japanese Patent Application National Publication (Laid-Open) No. 2001-527106 describes a foamed blow molded article utilizing only high-density polyethylene resin; however, since foamed blow molding of a foamed parison must be carried out by taking into consideration of drawdown, collapse of cells and the like upon obtaining the foamed blow molded article, only foamed blow molded article with low expansion ratios can be obtained, and it is difficult to obtain foamed blow molded articles with high expansion ratios which can be put to practical use.

JP-A No.2006-96910 and JP-A No.2008-222818 disclose that rod-shaped foams and the like are obtained by using a polyethylene resin having improved foamability, but foamed blow molded articles cannot be obtained by the inventions. Even if the technologies disclosed in JP-A No. 2006-96910 or JP-A No. 2008-222818 are applied to the production of foamed blow molded articles, it is still difficult to obtain satisfactory foamed blow molded articles because of the above-described problems occurring upon obtaining foamed blow molded articles, and it is almost impossible to obtain a heat resistant, high-density polyethylene resin foamed blow molded article with a high expansion ratio.

On the other hand, it is possible to obtain a foamed blow molded article having heat resistance by using a polypropylene resin as a base resin. However, foamed blow molded articles of polypropylene resins have a problem that the low-temperature brittleness of the polypropylene resins is insufficient as compared with polyethylene resins.

As such, it has been conventionally difficult to obtain a polyethylene resin foamed blow molded article with a high expansion ratio, having heat resistance (including resistance to low-temperature brittleness).

The present invention has been made to solve various problems described above in the case of using high-density polyethylene-based resins, and it is an object of the present invention to provide a polyethylene resin foamed blow molded article with a high expansion ratio, having a foam layer composed of a high-density polyethylene resin, and a thin-walled polyethylene resin foamed blow molded article having a uniform thickness and having heat resistance, heat insulation properties, low-temperature brittleness and lightweightness.

## SUMMARY OF THE INVENTION

The inventors of the present invention conducted extensive investigations on raw material polyethylene resins or resins composing foamed blow molded articles in order to achieve the object of the invention, and thus completed the present invention.

According to an aspect of the present invention, there is provided a polyethylene foamed blow molded article described below.

A polyethylene resin foamed blow molded article obtained by extruding a foamable resin melt containing a physical blowing agent through a die to form a foamed parison, subsequently inserting the foamed parison in a mold, and blow molding the foamed parison,

the foamed blow molded article having a foam layer having an apparent density of $0.1 \, \text{g/cm}^3$ or more to less than $0.7 \, \text{g/cm}^3$, wherein the resin composing the foam layer of the foamed blow molded article is:

(a) a polyethylene resin having a density of $0.935 \, \text{g/cm}^3$ or more,
(b) having a melt tension of 0.7 cN or more at 190°C,
(c) having a melt flow rate (MFR) of 1 g/10 min or more as measured at 190°C under a load of 2.16 kg, and
(d) having an one-quarter isothermal crystallization time of 40 seconds or longer, which is defined as the time required that an exothermic calorific value due to isothermal crystallization by following measurement condition (I) becomes equal to one-quarter of a total endothermic calorific value by following measurement condition (II);

the measurement condition (I): the exothermic calorific value is determined from a differential scanning calorimetry (DSC) curve representing isothermal crystallization by a heat flux DSC method ,which is measured by heating the resin composing the foam layer from 23°C to 160°C at a heating rate of 10°C/min, maintaining the resin at 160°C for 3 minutes, subsequently cooling the resin down to a temperature equal to crystallization temperature of the resin + 3°C at a cooling rate of 50°C/min, and subjecting the resin to isothermal crystallization under the temperature conditions of crystallization temperature + 3°C.

the measurement condition (II): the total endothermic calorific value is determined from a DSC curve produced upon measurement of the heat of fusion, which is measured by heating the resin composing the foam layer again from 23°C to 200°C at a heating rate of 10°C/min, after heat treatment of heating the resin from 23°C to 200°C at a heating rate of 10°C/min, and subsequently cooling the resin from 200°C to 23°C at a cooling rate of 10°C/min.

The polyethylene resin foamed blow molded article according to the item[1], wherein the dimensional change rate upon heating of the foamed blow molded article, obtained by the measurement of dimensional change upon heating under the conditions at 120°C according to JIS K6767 (1999), is 5% or less.

The polyethylene resin foamed blow molded article according to the item [1], wherein the total endothermic calorific value of the resin of the foam layer of the foamed blow molded article is 160 to 220 J/g.

The polyethylene resin foamed blow molded article according to the item [1], wherein a closed cell ratio of the foam layer of the foamed blow molded article is 60% or more.

The polyethylene resin foamed blow molded article according to the item [1], wherein the coefficient of variation, Cv (%), of the thickness of the foamed blow molded article is 60% or less.

The foamed blow molded article of the present invention is a foamed blow molded article with a high expansion ratio, having a foam layer made from a polyethylene resin having a density of 0.935 g/cm$^3$ or more, and is also a thin-walled foamed blow molded article having a uniform thickness.

The foamed blow molded article of the present invention is a polyethylene resin foamed blow molded article with a high expansion rate, having heat resistance, and is also an foamed blow molded article having heat insulation properties, low-temperature brittleness and, lightweightness and having satisfactory mechanical properties. The foamed blow molded article of the present invention is particularly useful in the ducts for air regulation in automobiles, and is also useful in warm-keeping and cold-keeping containers, electronic appliance parts, automobile parts, buffering materials, floats, and the like.

BRIEF DESCRIPTION OF THE DRAWINGS

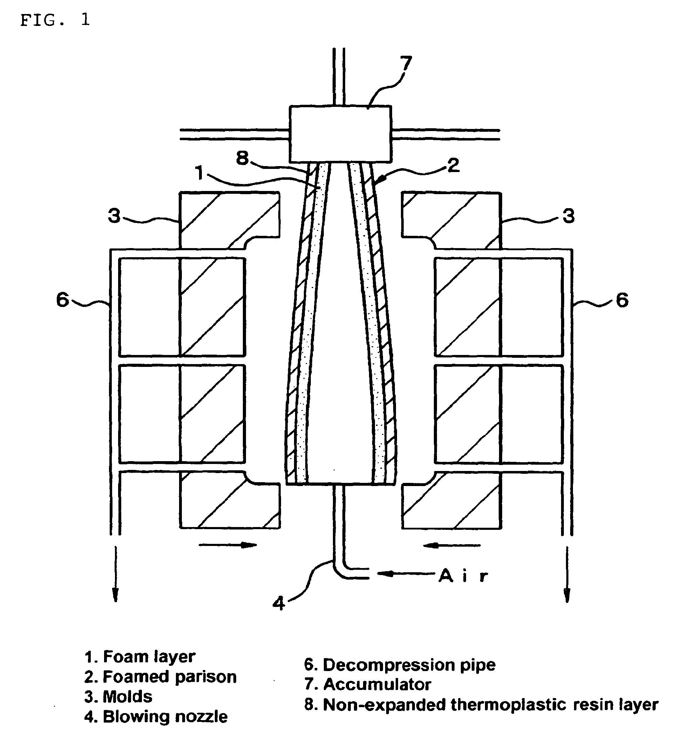

FIG. 1 is a diagram explaining an expanded parison of the present invention;

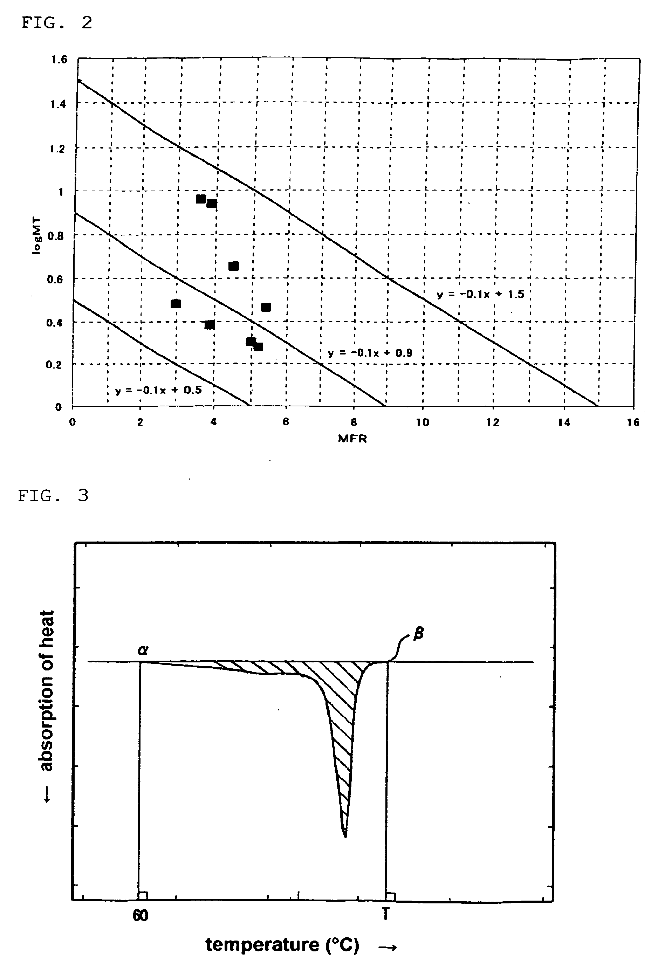

FIG. 2 is a graph showing the relationship between the melt tension (MT) and the melt flow rate (MFR) of a raw polyethylene resin (I) that satisfies the requirements (A) to (D) of a raw resin of the present invention;
FIG. 3 is a DSC curve for the measurement of the heat of fusion obtained by to a heat flux differential scanning calorimetry (DSC) method, which curve is obtained by heating the raw polyethylene resin (I) from 23°C to 200°C at a heating rate of 10°C/min, after heat treatment heating the resin from 23°C to 200°C at a heating rate of 10°C/min, subsequently cooling the resin from 200°C to 23°C at a cooling rate of 10°C/min(measurement condition(II)); and

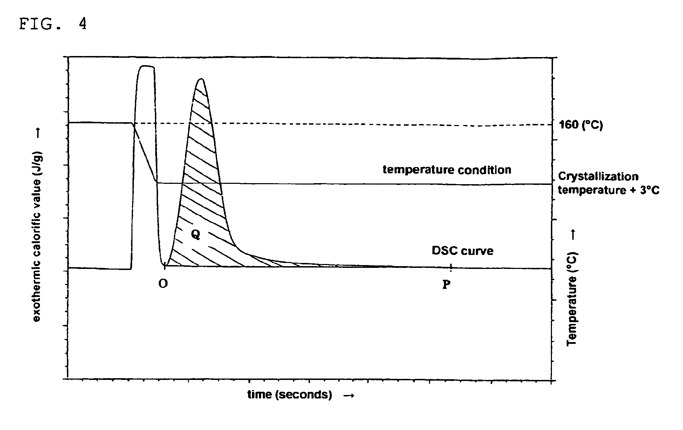

FIG. 4 is a DSC curve representing isothermal crystallization, which curve is obtained by a heat flux differential scanning calorimetry (DSC) method, by heating the raw polyethylene resin (I) from 23°C to 160°C at a heating rate of 10°C/min, maintaining the resin at 160°C for 3 minutes, subsequently cooling the resin down to a temperature equal to crystallization temperature of the raw polyethylene resin (I) + 3°C at a cooling rate of 50°C/min, and subjecting the resin to isothermal crystallization under the temperature conditions of crystallization temperature + 3°C (measurement condition(I)).

In the drawings, α represents the point corresponding to the temperature of initiation of fusion on the DSC curve(endothermic peak); β represents the point corresponding to the temperature of completion of fusion on the DSC curve (endothermic peak) ; T represents the temperature of completion of fusion; O represents the point corresponding to the time of initiation of heat generation due to isothermal crystallization; P represents the point corresponding to the time of completion of heat generation attributed to isothermal crystallization; and Q represents the exothermic calorific value.

DETAILED DESCRIPTION OF THE PREFERRED EMBODIMENTS

The resin that composes the foam layer of the foamed blow molded article according to the present invention is a resin satisfying all of the following requirements (a) to (d). When the resin satisfies all of the following requirements (a) to (d), a foamed parison suitable for foamed blow molding is obtained, and thus the foamed blow molded article of the present invention can be obtained therefrom.

(a) A polyethylene resin having a density of 0.935 g/cm$^3$ or more,
(b) having a melt tension of 0.7 cN or more at 190°C
(c) having a melt flow rate of 1 g/10 min or more as measured at 190°C under a load of 2.16 kg, and
(d) having an one-quarter isothermal crystallization time of 40 seconds or longer, which is defined as the time required that an exothermic calorific value due to isothermal crystallization by following measurement condition (I) becomes equal to one-quarter of a total endothermic calorific value by following measurement condition (II);

the measurement condition (I): the exothermic calorific value is determined from a differential scanning calorimetry (DSC) curve representing isothermal crystallization by a heat flux DSC method, which is measured by heating the resin composing the foam layer from 23°C to 160°C at a heating rate of 10°C/min, maintaining the resin at 160°C for 3 minutes, subsequently cooling the resin down to a temperature equal to crystallization temperature of the resin + 3°C at a cooling rate of 50°C/min, and subjecting the resin to isothermal crystallization under the temperature conditions of crystallization temperature + 3°C;

the measurement condition (II) : the total endothermic calorific value is determined from a DSC curve produced upon measurement of the heat of fusion, which is measured by heating the resin composing the foam layer again from 23°C to 200°C at a heating rate of 10°C/min, after heat treatment of heating the resin from 23°C to 200°C at a heating rate of 10°C/min, and subsequently cooling the resin from 200°C to 23°C at a cooling rate of 10°C/min.

The above requirements (a) to (d) are almost corresponded by the raw polyethylene resin (I) which satisfies the requirements (A) to (D) that will be described later, which is a raw resin composing the foam layer.

However, MFR, MT and the one-quarter isothermal crystallization time of the resin that composes the foam layer of the foamed blow molded article, may be different from those of the raw polyethylene resin (I) under the influence of the melt kneading process by an extruder, the resin to be mixed, or the like.

The one-quarter isothermal crystallization time of the resin that composes the foam layer of the foamed blow molded article is preferably 50 to 250 seconds. When the time is in the range mentioned above, upon shaping of the foamed parison by blowing a gas such as air into the foamed parison, the resin composing foamed parison does not undergo solidification before the shaping is completed, and a foamed parison that is suitable for foamed blow molding can be obtained.

The one-quarter isothermal crystallization time can be appropriately adjusted by mixing another resin to the raw polyethylene resin (I) to in the range of not impairing the anticipated effect of the present invention. Particularly, in the case of mixing a low-density polyethylene resin, the one-quarter isothermal crystallization time tends to be lengthened, and therefore, moldability can be improved.

The foamed blow molded article of the present invention prepares of a polyethylene resin containing 20% by weight to 100% by weight of the raw polyethylene resin (I), which satisfies all of the following requirements (A) to (D), as a raw resin:

(A) having a density of 0.935 g/cm$^3$ or more,

(B) having a melt tension of 1 cN or more at 190°C,

(C) having a melt flow rate (MFR) of 1 g/10 min or more as measured at 190°C under a load of 2.16 kg, and

(D) having an one-quarter isothermal crystallization time of 45 seconds or longer, which is defined as the time required that an exothermic calorific value due to isothermal crystallization by following measurement condition (I) becomes equal to one-quarter of a total endothermic calorific value by following measurement condition (II);

the measurement condition (I): the exothermic calorific value is determined from a differential scanning calorimetry (DSC) curve representing isothermal crystallization by a heat flux DSC method, which is measured by heating the raw polyethylene resin (I) from 23°C to 160°C at a heating rate of 10°C/min, maintaining the resin at 160°C for 3 minutes, subsequently cooling the resin down to a temperature equal to crystallization temperature of the resin + 3°C at a cooling rate of 50°C/min, and subjecting the resin to isothermal crystallization under the temperature conditions of crystallization temperature + 3°C;

the measurement condition (II): the total endothermic calorific value is determined from a DSC curve produced upon measurement of the heat of fusion, which is measured by heating polyethylene raw resin (I) again from 23°C to 200°C at a heating rate of 10°C/min, after heat treatment of heating the resin from 23°C to 200°C at a heating rate of 10°C/min, and subsequently cooling the resin from 200°C to 23°C at a cooling rate of 10°C/min.

If the amount of the raw polyethylene resin (I) that satisfies the above requirements (A) to (D) is too small, a foamed parison suitable for foamed blow molding cannot be obtained, and a foamed blow molded article cannot be obtained. The amount of the raw polyethylene resin (I) is preferably 30% by weight or more, more preferably 50% by weight or more, even more preferably 70% by weight or more, particularly preferably 85% by weight or more, and most preferably 90% by weight or more.

Since the raw polyethylene resin (I) used in the present invention satisfies all of the requirements (A) to (D), an foamable resin melt suitable for foamed blow molding is obtained, and thus a foamed parison having satisfactory moldability is obtained.

On the premise that the purpose and effects of the present invention are attained, a polyethylene resin prepared by mixing 80% by weight to 0% by weight of another polymer to the raw polyethylene resin (I) can be used to obtain the foamed blow molded article of the present invention. The amount of the other polymer is preferably 70% by weight or less, more preferably 50% by weight or less, even more preferably les than 30% by weight, particularly preferably 15% by weight or less, and most preferably 10% by weight or less.

The other polymer may be a resin other than the raw polyethylene resin (I), and examples thereof include a polyethylene resin such as a linear low-density polyethylene resin, a low-density polyethylene resin, a linear ultralow-density polyethylene resin or a high-density polyethylene resin; an ethylene-propylene copolymer, an ethylene-propylene-1-butene copolymer, a styrene-butadiene-styrene copolymer, a styrene-ethylene-butadiene-styrene copolymer, and the like. As these other polymers, it is preferable to use polyethylene resins other than the raw polyethylene resin (I), from the viewpoint of recyclability.

Particularly, in the case of mixing a low-density polyethylene resin, it is preferable that the amount of the low-density polyethylene resin in the raw material polyethylene resin is less than 30% by weight, more preferably 15% by weight or less, and particularly preferably 10% by weight or less, for the applications where heat resistance is required. As the amount of the low-density polyethylene resin increases, the dimensional change rate upon heating of the foamed blow molded article increases along, and it is difficult to obtain heat resistance.

In the present invention, the raw polyethylene resin (I) may be an ethylene homopolymer, or an ethylene copolymer having an ethylene component unit at a proportion of 50% by mole or more, preferably 70% by mole or more, and more preferably 90% by mole or more, and may also be a mixture of two or more kinds thereof.

As the raw polyethylene resin (I), for example, polyethylenes manufactured by Tosoh Corp. (grade name:06S55A and 08S55A), polyethylenes manufactured by Japan Polyethylene Corp. (trade name: "Novatec HD", grade name: HJ362N and HS451), and the like can be used. Furthermore, a recycled polyethylene resin can also be used as the raw polyethylene resin (I) by the present invention. Specifically, a recycled resin can be obtained by pulverizing and defoaming a foamed molded article containing the raw polyethylene resin (I), and then re-pelletizing the product resulting therefrom.

In the present invention, the density of the raw polyethylene resin (I) is 0.935 g/cm$^3$ or more. If the density is less than 0.935 g/cm$^3$, the resin does not show heat resistance, low-temperature brittleness and rigidity, which are characteristics of so-called high-density polyethylene resins, and it is difficult to obtain a polyethylene resin expansion blow molded product having excellent heat resistance, which is aimed by the present invention. The density of the raw polyethylene resin (I) is preferably 0.938 g/cm$^3$ to 0.980 g/cm$^3$, and more preferably 0.940 g/cm$^3$ to 0.970 g/cm$^3$.

The melt tension (MT) of the raw polyethylene resin (I) is 1 cN or more, and the MT is preferably 1 to 10 cN. When the MT value is in the range mentioned above, drawdown does not occur during foamed blow molding, and deformation of cells, rupture of cells and the like are not likely to occur. The upper limit of the MT value is preferably 16 cN, since the value is required to be a value capable of obtaining a foamed blow molded article.

Furthermore, the melt flowrate (MFR) of the raw polyethylene resin (I) is 1 g/10 min or more. If the MFR value is too large, there is a fear that drawdown may occur during foamed blow molding. Therefore, the upper limit of the MFR value is preferably 10 g/10 min or less. The MFR value is more preferably 2 to 9 g/10 min.

When the MFR value is in the range mentioned above, there may be obtained a foamed parison having a fluidity equivalent to that of a molten resin, which is suitable for foamed blow molding, and having satisfactory moldability. If the MFR value is too small, it is difficult to extrude the resin molten product unless the extrusion temperature is raised. If the extrusion temperature is adjusted to a high temperature, there is a fear that the blowing agent may scatter away, and it may be difficult to obtain the intended foamed blow molded article with a high expansion ratio.

It is preferable that the melt tension (MT) and the melt flow rate (MFR) of the raw polyethylene resin (I) satisfy the following relational expressions. Since stretching a foamed parison in the direction of extrusion is restricted in foamed blow molding, in order to maintain the foamed parison to have a certain shape, it is preferable that the following relational expressions concerning MT, which represents melt tension, and MFR, which represents the fluidity in a molten state. It is preferable that the lower limit of log (MT) satisfies the following formula (I), and more preferably the following formula (2):

$$\log(\text{MT}) > -0.1 \times \text{MFR} + 0.5 \qquad (1)$$

$$\log(\text{MT}) > -0.1 \times \text{MFR} + 0.9 \qquad (2)$$

It is also preferable that the upper limit of log(MT) satisfies the following formula (3).

$$\log(\text{MT}) < -0.1 \times \text{MFR} + 1.5 \qquad (3)$$

The formulas (1) to (3) are based on FIG. 2, which shows, when MFR is plotted along the x-axis and log(MT) along the y-axis, that when the plots are in the specific ranges shown above, a foamed parison suitable for obtaining a foamed blow molded article is obtained, and foamed blow moldability is improved.

The melt tension (MT) can be measured using a type II melt tension tester manufactured by Toyo Seiki Seisaku-sho, Ltd. Specifically, the value of MT is measured by extruding a resin in the shape of strand through an orifice having a hole diameter of 2. 095 mm and a length of 8 mm under the conditions of a resin temperature of 190°C and an extruding piston speed of 10 mm/min, hanging the strand-shaped product on a pulley for tension detection having a diameter of 45 mm, subsequently winding the strand-shaped product using a winding roller having a diameter of 50 mm while increasing the winding speed at a rate of about 5 rpm/second, and detecting the tension using a detector connected to the pulley for tension detection.

The value of MFR in the present invention is a value measured based on JIS K7210 (1976), under the conditions of a temperature of 190°C and a load of 2.16 kg.

The raw polyethylene resin (I) of the present invention has an isothermal crystallization time, that is, one-quarter isothermal crystallization time, of 45 seconds or longer, which is defined as the time required that an exothermic calorific value due to isothermal crystallization by following measurement condition (I) becomes equal to one-quarter of a total endothermic calorific value by following measurement condition (II); the measurement condition (I): the exothermic calorific value is determined from a differential scanning calorimetry (DSC) curve representing isothermal crystallization by a heat flux DSC method which is measured by heating 2 ± 0.2 mg of polyethylene raw resin (I) under a nitrogen atmosphere from 23°C to 160°C at a heating rate of 10°C/min, maintaining the resin at 160°C for 3 minutes, subsequently cooling the resin down to a temperature equal to crystallization temperature of the resin + 3°C at a cooling rate of 50°C/min, and subjecting the resin to isothermal crystallization under the temperature conditions of crystallization temperature + 3°C;

the measurement condition (II) : the total endothermic calorific value is determined from a DSC curve produced upon measurement of the heat of fusion, which is measured by heating polyethylene resin (I) again from 23°C to 200°C at a heating rate of 10°C/min, after heat treatment of heating the resin from 23°C to 200°C at a heating rate of 10°C/min, and subsequently cooling the resin from 200°C to 23°C at a cooling rate of 10°C/min.

When the one-quarter isothermal crystallization time for the raw polyethylene resin (I) is in the range mentioned above, upon shaping of the foamed parison by blowing a gas such as air into the foamed parison, the resin composing foamed parison does not undergo solidification before the shaping is completed, and a foamed parison that is suitable for foamed blow molding can be obtained. The lower limit of the one-quarter isothermal crystallization time is preferably 55 seconds or longer. Furthermore, if the exothermic calorific value of isothermal crystallization is less than one-quarter of the total endothermic calorific value, or if the one-quarter isothermal crystallization time exceeds 300 seconds, the degree of crystallinity of the raw polyethylene resin (I) during foamed blow molding is decreased, and it becomes difficult for the resin that composes the foam layer of the foamed blow molded article to maintain cells. Thus, the upper limit of the one-quarter isothermal crystallization time is preferably 300 seconds or shorter, and more preferably 200 seconds or shorter.

Measurement of the endothermic calorific value of the raw polyethylene resin (I) of the present invention is carried out as follows. The endothermic peak (melting peak) and the endothermic calorific value of the raw polyethylene resin (I) are determined based on JIS K7122 (1987), by heat flux differential scanning calorimetry (DSC) measurement.

That is, the endothermic calorific value is determined from a DSC curve produced upon measurement of the heat of fusion, which is measured using a heat flux differential scanning calorimeter by heating about 2 to 10 mg of a sample in a nitrogen atmosphere again from 23°C to 200°C at a heating rate of 10°C/min, after heat treatment of heating the resin from 23°C to 200°C at a heating rate of 10°C/min, and subsequently cooling the resin from 200°C to 23°C at a cooling rate of 10°C/min.

The endothermic peak is an endotherm curve peak derived from the heat of fusion of the resin, and the endothermic calorific value of the endothermic peak corresponds to the area of the endothermic peak. The sum of the endothermic calorific value of all the endothermic peaks is defined as the total endothermic calorific value. Specifically, the temperature of initiation of melting, 60°C, of the sample on the DSC curve which has been obtained based on JIS K7122 (1987) as described above is designated as $\alpha$, the point on the DSC curve corresponding to the temperature of completion of fusion T of the sample is designated as $\beta$, and a straight line $\alpha$-$\beta$ connecting. the point $\alpha$ and the point $\beta$ is drawn. The endothermic calorific value corresponds to the area of the part surrounded by the DSC curve and the line segment $\alpha$-$\beta$ (the part shaded with oblique lines in FIG. 3). Furthermore, the temperature of completion of fusion T means the temperature at the intersection between the DSC curve and the baseline i.e., the straight line $\alpha$-$\beta$ on the higher temperature side of the endothermic peak located on the highest temperature side.

For the raw polyethylene resin (I) of the present invention, the crystallization temperature of the raw polyethylene resin (I) is the apical temperature of the exothermic curve peak shown in a DSC curve based on JIS K7121, which is obtained by heating about 2 to 10 mg of the polyethylene raw resin (I) in a nitrogen atmosphere from 23°C to 200°C using a heat flux differential scanning calorimeter, and then cooling the resin from 200°C to 23°C at a cooling rate of 10°C/min.

According to the present invention, the one-quarter isothermal crystallization time of the polyethylene raw resin (I) or the resin that composes the foam layer of the foamed blow molded article is measured as follows.

The exothermic calorific value due to isothermal crystallization, Q (J/g), and the crystallization time (seconds) at the time of isothermal crystallization are measured using a heat flux differential scanning calorimeter (heat flux differential scanning calorimeter DSC Q1000, manufactured by TA Instruments Japan K.K.), by heating 2 ± 0.2 mg of a sample for measurement from 23°C to 160°C at a heating rate of 10°C/min, maintaining the sample at 160°C for 3 minutes, subsequently cooling the sample to a temperature equal to crystallization temperature of the resin composing the sample measured + 3°C at a cooling rate of 50°C/min, and crystallizing the sample under isothermal conditions at crystallization temperature of the resin measured + 3°C. The zero-points of the crystallization time are defined such that the point at which exothermic peak due to isothermal crystallization initiated is designated as O, and the point at which exothermic peak completed is designated as P. As a result of the measurement, a DSC curve representing isothermal crystallization, in which the exothermic calorific value is plotted on the vertical axis, and the isothermal crystallization time is plotted on the horizontal axis, is obtained (FIG. 4).

Apart from that, one-quarter of the total endothermic calorific value is calculated from the total endothermic calorific value of the resin measured, which has been obtained by the method described above (measurement condition (II)). Then, the time required that an exothermic calorific value due to isothermal crystallization becomes equal to one-quarter of a total endothermic calorific value, is defined as the one-quarter isothermal crystallization time (seconds).

Here, the measured temperature indicated as crystallization temperature + 3°C, which is a condition for isothermal crystallization, is a value determined from the temperature of a foamed parison immediately before shaping the extruded foamed parison in molds.

The raw polyethylene resin (I) in the present invention preferably has a total endothermic calorific value of 160 to 220 J/g, as determined by the heat flux differential scanning calorimetry measurement. When the total endothermic calorific value is in the range mentioned above, the resin has heat resistance, and management of the foaming temperature or the cooling time inside the molds during foamed blow molding is made easy. The lower limit of the total endothermic calorific value is preferably 170 J/g, and more preferably 180 J/g. On the other hand, the upper limit of the total endothermic calorific value is preferably 210 J/g, and more preferably 200 J/g.

The melting point of the raw polyethylene resin (I) according to the present invention is preferably 123°C or higher, more preferably 124 to 133°C, and even more preferably 125 to 133°C. When the melting point is in the range mentioned above, a polyethylene resin foamed blow molded article having excellent heat resistance can be obtained. The melting point is the top temperature of an endothemic peak having the largest area in an endotherm curve (DSC) obtained by the heat flux differential scanning calorimetry measurement based on JIS K7121 (1987).

As the blowing agent used in the present invention, a physical blowing agent is used. Examples of the physical blowing agent include aliphatic hydrocarbons such as propane, normal-butane, isobutene, normal-pentane, isopentane, normal-hexane, isohexane, cyclohexane, and the like; chlorinated hydrocarbons such as methyl chloride, ethyl chloride, and the like; fluorinated hydrocarbons such as 1,1,1,2-tetrafluoroethane, 1,1-difluoroethane, and the like; various alcohols, various ethers and the like, each having a boiling point equal to or lower than the extrusion temperature; carbon dioxide, nitrogen, water, and the like. Among these blowing agents, carbon dioxide is particularly preferred. These blowing agents are not limited to be used singly, and mixtures of two or more kinds can also be used.

In the present invention, a blowing containing carbon dioxide of 20 to 100% by mole is preferred from the viewpoints of the cooling time required when an foamed parison is molded in a mold, the dimensional stability of the foamed blow molded article after molding, stability of the properties, shortening of the aging time, and the like. Particularly, a blowing agent containing 70 to 100% by mole of carbon dioxide is more preferred. In regard to the amount of the blowing agent, an appropriate amount may be used in accordance with the desired expansion ratio (apparent density), and an amount of about 0.1 to 0.8 moles per kilogram of the polyethylene resin is preferred.

Upon obtaining the foamed blow molded article of the present invention, a cell controlling agent such as silica, talc, sodium citrate or sodium hydrogen carbonate is usually added in an amount of about 0.1 to 3 parts by weight relative to 100 parts by weight of the polyethylene resin. In addition to that, if desired, various additives can be used. Examples of these additives include an ultraviolet absorbing agent, an infrared absorbing agent, a flame retardant, a fluidity improver, a thermal stabilizer, an oxidation inhibitor, an anti-weathering agent, a colorant, an antibacterial agent, an antifungal agent, an inorganic filler material, an electrical conductivity imparting agent, and the like.

The foamed blow molded article of the present invention can be obtained by extruding a foamable resin melt which is prepared by melt kneading a polyethylene resin containing 20% by weight to 100% by weight of the polyethylene raw resin (I) and a physical blowing agent, through a die in an extruder to form a foamed parison, subsequently inserting the foamed parison in a mold, and blow molding the foamed parison. Here, the foamed parison or the foamed blow molded article according to the present invention is constituted of a foam layer only, but may additionally have a resin layer on the outer side and/or inner side of the foam layer. The resin layer formed on the outer side and/or inner side of the foam layer can be formed by a co-extrusion method.

When a foamed parison is shaped into a desired shape, use can also be made of a method including blowing a gas such as air (blow air) into the hollow part in the foamed parison; further inserting a plurality of blow pins into the interior of the foamed parison; supplying air (blow air) through at least one of the blow pins while discharging the air between the outer surface of the foamed parison (surface on the mold side) and the mold surface, to thereby blow mold the foamed parison; and at the time point at which shaping has been completed, supplying a cooling gas (i.e, air) through one of the blow pins while discharging the cooling gas (i.e, air) through another blow pin, thereby sufficiently cooling the interior of the foamed blow molded article.

Furthermore, if necessary, the outer surface of the expanded parison can be suctioned through an air suction hole provided in the molds, and thus the foamed blow molded article can be shaped into a shape suitable to the shape of the mold.

In order to perform molding by blowing a gas into the hollow part of the foamed parison inside the molds, it is preferable to maintain the maximum temperature at the hollow part of the foamed parison and the pressure inside the hollow part of the foamed parison in certain ranges upon blowing of the gas.

The maximum temperature at the hollow part inside of the foamed parison is preferably 70 to 120°C. When the temperature of the hollow part is in the range mentioned above, it is possible to obtain a satisfactory foamed blow molded article. If the maximum temperature at the hollow part of the foamed parison is too high, there is a fear that the cells of the foamed blow molded article may be ruptured or become non-uniform, or the cells may be squashed by the gas blown thereinto. On the other hand, if the temperature inside the hollow part is too low, there is a fear that the resin may solidify while expansion or foaming does not proceed sufficiently, and an foamed blow molded article having a predetermined apparent density cannot be obtained. The maximum temperature at the hollow part can be appropriately changed by managing the pressure of the gas blown or the temperature of the gas blown thereinto. The maximum temperature at the hollow part is the maximum temperature obtained when a temperature measuring device such as thermometer is inserted into the central part in the length direction of the hollow part of the foamed parison, and the temperature inside the hollow part of the foamed parison from the initiation to completion of gas blowing.

Furthermore, it is preferable that the pressure of the gas blow into the hollow part of the foamed parison is 0.15 to 0.45 MPa. When the pressure is in the above range, cells on the inner side of the foamed blow molded article are less squashed, and an foamed blow molded article having a uniform cell diameter is obtained.

It is preferable that the inner and outer temperature difference of the foamed parison at the time of foamed blow molding, that is, the temperature difference between the temperature on the inner side of the foamed parison (hollow part side) and the temperature on the outer side of the foamed parison (mold surface side), is preferably close to each other since the temperature difference affects foamed moldability, thickness of the molded product, and the like. The temperature difference is more preferably in the range of 0 to 7°C, and even more preferably in the range of 0 to 5°C.

The inner and outer temperature difference of the foamed parison is measured by irradiating the surface of the foamed parison at the part 10 cm away from the die lips toward the mold, with a laser thermometer for 5 seconds. For the outer side temperature, temperatures are measured at four sites at an equal interval along the circumferential direction of the outer periphery, and the average value is designated as the outer side temperature. In the case of measuring the inner side, a part of the foamed parison is peeled off so as to irradiate the inner side, temperatures are measured at four sites at an equal interval along the circumferential direction of the foamed parison, and the average value is designated as the inner surface side temperature. The difference between the average value of this inner surface side temperature and the average value of the outer surface side temperature is designated as the inner and outer temperature difference.

In the present invention, the resin that composes the foam layer of the foamed blow molded article is a polyethylene resin having a density of 0.935 g/cm$^3$ or more. If the density is less than 0.935 g/cm$^3$, the resin cannot exhibit heat resistance, low-temperature brittleness and rigidity, which are characteristics of so-called high-density polyethylene resins, and it is difficult to obtain a polyethylene resin foamed blow molded article having excellent heat resistance, which is aimed by the present invention. The density of the polyethylene resin that composes the foam layer of the foamed blow molded article according to the present invention is preferably 0.938 g/cm$^3$ to 0.980 g/cm$^3$, and more preferably 0.940 g/cm$^3$ to 0.970 g/cm$^3$.

The apparent density of the foam layer of the foamed blow molded article obtained by the present invention is 0.1 g/cm$^3$ or more and less than 0.7 g/cm$^3$. If the apparent density is too small, mechanical properties such as flexural strength and compression strength are decreased, and there is a fear that the article may not be tolerable to actual use. If the apparent density is too large, the expansion ratio becomes excessively low, and there is a fear that the heat insulation properties or lightweightness as a foam may not be obtained. The apparent density of the foam layer of the foamed blow molded article is preferably 0.1 to 0.5 g/cm$^3$, and more preferably 0.1 to 0.4 g/cm$^3$.

The foamed blow molded article of the present invention has a dimensional change rate upon heating of 5% or less in the measurement of dimensional change upon heating made under the conditions of 120°C according to JIS K6767 (1999). If the dimensional change rate upon heating is too large, a foamed blow molded article having heat resistance, which is aimed by the present invention, cannot be obtained. Since conventional foamed blow molded articles prepared of high-density polyethylene resins contain significant amounts of low-density polyethylene, if the foamed blow molded articles are heated to 120°C, which is above the melting point of low-density polyethylene, the low-density polyethylene is softened, and changes in the dimension of the foamed blow molded articles can be seen. Thus, it is difficult to obtain a foamed blow molded article having a dimension change rate upon heating in the range mentioned above. Particularly, in order to have heat resistance, it is preferable that the dimensional change rate upon heating is 4% or less.

Particularly, in the present invention, when the raw polyethylene resin (I) is used, the dimensional change rate upon heating at 120°C can be adjusted to 5% or less.

The dimensional change rate upon heating is a value which is based on the B method of JIS K6767 (1999) for the dimensional stability at high temperature, and is determined by the following expression after heating and maintaining the foamed blow molded article of a sample for measurement in a dryer for heating for 24 hours under the conditions of 120°C, subsequently cooling the molded article to 23°C, and measuring the lengths before heating and after heating of the same site in the maximum length area in the longitudinal direction of the foamed blow molded article.

Dimensional change rate upon heating (%) = [(maximum length in the longitudinal direction of foamed blow molded article before heating - maximum length in the longitudinal direction of foamed blow molded article after heating) × 100] ÷ [maximum length in the longitudinal direction of foamed blow molded article before heating]

Here, the maximum length in the longitudinal direction means the maximum value obtained when the length is measured along the outer surface of the foamed blow molded article toward a direction that is perpendicular to the circumferential direction and the thickness direction of the foamed blow molded article.

The evaluation results for the dimensional change rate upon heating of the obtained foamed blow molded article are presented in Table 4.

The total endothermic calorific value of the resin that composes the foam layer of the foamed blow molded article as measured by heat flux differential scanning calorimetry, is preferably 160 to 220 J/g. When the total endothermic calorific value is in the range mentioned above, the resin has heat resistance, and management of the foamed temperature or the cooling time inside the mold becomes easy. The lower limit of the total endothermic calorific value is more preferably 170 J/g, and even more preferably 180 J/g. On the other hand, the upper limit of the total endothermic calorific value is more preferably 210 J/g, and even more preferably 200 J/g.

In the present invention, since an foamed blow molded article can be obtained without improving moldability by mixing a low-density polyethylene, the total endothermic calorific value of the resin that composes the foam layer of the foamed blow molded article can be increased, and thereby it is made possible to obtain a foamed blow molded article having a dimensional change rate of 5% or less upon heating at 120°C. An example of the method of increasing the total endothermic calorific value, may involve reducing the amount of incorporation of the low-density polyethylene resin that is incorporated into the polyethylene resin, or the like.

In the case of measuring the melt tension (MT) and melt flow rate (MFR) of the resin that composes the foam layer of the foamed blow molded article of the present invention, as well as the crystallization temperature, exothermic calorific value of crystallization and total endothermic calorific value, a sample prepared by heating and melting a sample piece collected from the foam layer of the foamed blow molded article in a vacuum oven at 200°C for about 15 minutes to defoamed, is subjected to measurement in the same manner as in the measurement methods for the raw material resin described above.

The foamed blow molded article of the present invention generally has an average thickness of 0.5 to 20 mm. The average thickness of the foamed blow molded article is preferably 0.5 to 10 mm, and particularly in the case of a thin-walled foamed blow molded article, the average thickness is preferably 0.5 to 5 mm. Particularly, since it is difficult to control the average thickness in a thin-walled foamed blow molded article, it is difficult to obtain a foamed blow molded article having a uniform thickness.

The average thickness of the foamed blow molded article according to the present invention is a value measured by the following method. For five vertical cross-sections in total that are perpendicular to the longitudinal direction, specifically at the center of the longitudinal direction, near the two ends of the longitudinal direction, and at parts intermediate to those sites, the thickness of the vertical cross-section is measured at 8 sites at an equal interval in the circumferential direction of each of the vertical cross-sections, and an arithmetic mean value of the thicknesses obtained at 40 sites is taken as the average thickness of the foamed blow molded article.

It is preferable for the foamed blow molded article of the present invention that the coefficient of variation, Cv (%), of the thickness is 60% or less. When the coefficient of variation is in the range mentioned above, a foamed blow molded article having a small variation in the thickness can be obtained, and since the thickness is uniform, the foamed blow molded article has uniform heat insulation properties, as well as improved mechanical strength such as compression strength. The coefficient of variation of the thickness is preferably 50% or less, more preferably 45% or less, and even more preferably less than 35%.

The coefficient of variation, Cv (%), of the thickness can be determined by expressions (4) and (5) that will be described later, and the coefficient of variation is a value determined by [(standard deviation (mm) of the thickness of the foamed blow molded article/average value (mm) of the thickness of the foamed blow molded article) × 100], and is an index representing the degree of variation in the thickness of foamed blow molded article.

The average cell diameter a in the thickness direction of the foamed blow molded article of the present invention is preferably 0.05 to 1.0 mm, and more preferably 0.05 to 0.9 mm.

For the foamed blow molded article of the present invention, it is preferable that the cell diameter ratios, **a/b** and **a/c,** are 0.2 to 1.3, respectively, provided that **a** represents the average cell diameter in the thickness direction of the molded article, **b** represents the average cell diameter in the longitudinal direction of the molded article, and **c** represents the average cell diameter in the circumferential direction of the molded article. The cell diameter ratios, **a/b** and **a/c,** are affected by the amount of drawdown of the foamed parison, the blow ratio, or the pressure of the blow air. However, when the cell diameter ratios are in the range mentioned above, satisfactory mechanical properties can be maintained without the cells being flattened. From this point of view, it is preferable that the cell diameter ratios, **a/b** and **a/c,** are 0.3 to 1.0, respectively.

Measurement of the average cell diameter **a** is carried out as follows. With respect to a vertical cross-section that is perpendicular to the longitudinal direction of a polyethylene resin foamed blow molded article, an enlarged image of the vicinity of the center part and the two end parts of the vertical cross-section of each of a pair of walls of the foamed blow molded article that are facing each other (6 sites in total) is projected, and a line segment having a length of x (mm), which corresponds to the total thickness, is drawn in the thickness direction of the projected image. The number of cells that intersect with the line segment is counted, and the value determined by the expression: cell diameter (mm) = x/ number of cells, is taken as the cell diameter of each vertical cross-section. An arithmetic mean value of the cell diameters of the vertical cross-sections at the six sites in total, which value has been determined by the operation described above, is designated as the average cell diameter **a.**

Measurement of the average cell diameter **b** is carried out as follows. With respect to a vertical cross-section that is obtained by bisecting a polyethylene resin foamed blow molded article in the circumferential direction and a direction that is perpendicular to the thickness direction (longitudinal direction) of the foamed blow molded article, an enlarged image of the vicinity of the center part and the two end parts of the vertical cross-section of each of a pair of walls of the foamed blow molded article that are facing each other (6 sites in total) is projected, and a line segment having a length corresponding to an effective length of 30 mm as would be measured before enlargement, is drawn at a position which bisects the thickness of the foamed blow molded article, and along the longitudinal direction of the foamed blow molded article on the projected image. The number of cells that intersect with the line segment is counted, and the value determined by the expression: cell diameter (mm) = 30 / (number of cells - 1), is taken as the cell diameter of each vertical cross-section. An arithmetic mean value of the cell diameters of the vertical cross-sections at the six sites in total, which value has been determined by the operation described above, is designated as the average cell diameter **b.**

Measurement of the average cell diameter **c** is carried out as follows. On a projected image which shows an enlarged image of a cross-section in the circumferential direction of the vicinity of the center part and the two end parts of a polyethylene resin foamed blow molded article (3 sites in total), a line segment (may also be a curved line) having a length corresponding to an effective length of 60 mm as would be measured before enlargement, is drawn at a position which bisects the thickness of the foamed blow molded article, and along the circumferential direction of the foamed blow molded article. The number of cells that intersect with the line segment is counted, and the value determined by the expression: cell diameter (mm) = 60 / (number of cells - 1), is taken as the cell diameter of each vertical cross-section in the circumferential direction. An arithmetic mean value of the cell diameters of the vertical cross-sections in the circumferential direction at the three sites in total, which value has been determined by the operation described above, is designated as the average cell diameter **c.** The measurement sites for the average cell diameter are selected from those areas where the cells have not undergone significant deformation, which mean areas that are mostly free from the sites where the cells are crushed or largely enlarged.

The foam layer of the foamed blow molded article of the present invention preferably has a closed cell ratio of 60% or more. When the closed cell ratio is too low, there is a fear that a foamed blow molded article having excellent heat insulation properties and mechanical properties cannot be obtained. From such a viewpoint, it is preferable that the closed cell ratio in the foam layer of the foamed blow molded article of the present invention is 70% or more.

Particularly, in the present invention, an excellent foamed blow molded article having a high expansion ratio, and also having a high percentage of closed cell ratio even in the case of being an foamed blow molded article having a thin average thickness, can be obtained.

EXAMPLES

Examples and Comparative Examples of the present invention will be described below. However, the present invention is not intended to be limited to the disclosure of the Examples.

Example 1

100 parts by weight of a polyethylene resin, grade name: 06S55A, manufactured by Tosoh Corp.; density is 0.950 g/cm$^3$, MFR is 4.5 g/10 min, MT is 4.5 cN, and other properties are presented in Table 1 as the raw polyethylene resin(I), and 3 parts by weight of a cell controlling agent master batch, a cell controlling agent master batch prepared by mixing 80 parts by weight of a polyethylene resin with 20 parts by weight of talc, were melt kneaded under heating in an extruder having an orifice diameter of 65 mm to obtain a foamable resin melt. Carbon dioxide was fed as a blowing agent to the foamable resin melt in the injection amount indicated in Table 1 per kilogram of the resin, through the blowing agent inlet port of the extruder, and the mixture was kneaded to obtain a foamable resin melt.

The foamable resin melt was filled in an accumulator connected to the extruder, and the foamable resin melt was extruded through a cyclic die disposed at the front end of the accumulator at the extrusion temperature and rate of ejection indicated in Table 1, to form a foamed parison. The inner and outer temperature difference of the foamed parison was 2°C. Subsequently, the foamed parison was placed, in a softened state, between molds that are disposed immediately below the cyclic die, and the molds were clamped. Air was blown through an air inlet of the molds into the interior of the foamed parison, and thereby foamed blow molding was performed under the pressure conditions indicated in Table 1. Upon shaping, a plurality of blow pins were inserted into the foamed parison, and gas (blow air) was supplied through one of the blow pins to shape the foamed parison during foamed blow molding. At the time point at which shaping has been completed, a cooling gas was supplied through one of the blow pins while the cooling gas was discharged through another blow pin, and thereby the interior of the molded article was sufficiently cooled. Upon this foamed blow molding, the maximum temperature of the hollow part indicated in Table 1 was recorded. For the molds, a set of molds for hollow duct molding was used. The properties of the obtained molded article are presented in Table 2 and Table 3.

Example 2

A pulverized product of the foamed blow molded article obtained in Example 1 was defoamed and then was pelletized again, and thereby a recycled polyethylene resin was prepared. The properties of the recycled polyethylene resin were as follows: density is 0.950 g/cm$^3$, MFR is 5.9 g/10 min, MT is 2.2 cN, crystallization temperature is 118.3°C, and one-quarter crystallization time is 84 seconds.
A foamed blow molded product was obtained in the same manner as in Example 1, except that a resin mixture prepared by mixing 80 parts by weight of this recycled polyethylene resin and 20 parts by weight of the polyethylene resin used in Example 1 (polyethylene resin manufactured by Tosoh Corp., grade name: 06S55A) was used as the raw polyethylene resin (I). The properties of the obtained foamed blow molded article are presented in Table 2 and Table 3.

Example 3

A foamed blow molded article was obtained in the same manner as in Example 1, except that a polyethylene resin, "Novatec HD", manufactured by Japan Polyethylene Corp. grade name: HJ362N; density is 0. 953 g/cm$^3$, MFR is 5. 0 g/10 min, MT is 2.0 cN, and other properties are presented in Table 1, was used as the raw polyethylene resin (I). The properties of the obtained foamed blow molded article are presented in Table 2 and Table 3.

Example 4

A pulverized product of the foamed blow molded article obtained in Example 3 was defoamed and then was pelletized again, and thereby a recycled polyethylene resin was prepared. The properties of the recycled polyethylene resin were as follows: density is 0.953 g/cm$^3$, MFR is 5.4 g/10 min, MT is 1.8 cN, crystallization temperature is 119.3°C, and one-quarter crystallization time is 89 seconds.
A foamed blow molded article was obtained in the same manner as in Example 1, except that a resin mixture prepared by mixing 80% by weight of this recycled polyethylene resin and 20% by weight of the polyethylene resin used in Example 3, "Novatec HD" manufactured by Japan Polyethylene Corp., grade name: HJ362N, was used as the raw polyethylene resin (I). The properties of the obtained foamed blow molded article are presented in Table 2 and Table 3.

Example 5

A foamed blow molded article was obtained in the same manner as in Example 1, except that a polyethylene resin manufactured by Tosoh Corp. grade name: 08S55A; density is 0.952 g/cm$^3$, MFR is 3.6 g/10 min, MT is 9.1 cN, and other properties are presented in Table 1, was used as the raw polyethylene resin (I). The properties of the obtained foamed blow molded article are presented in Table 2 and Table 3.

Example 6

The foamed blow molded article obtained in Example 5 was pulverized, defoamed and then was pelletized again, and thereby a recycled polyethylene resin was prepared.
The properties of this recycled polyethylene resin were as follows: density is 0.952 g/cm$^3$, MFR is 4.2 g/10 min, MT is 8.4 cN, crystallization temperature is 115.5°C, and one-quarter crystallization time is 90 seconds. A foamed blow molded article was obtained in the same manner as in Example 1, except that a resin mixture prepared by mixing 80% by weight of this recycled polyethylene resin and 20% by weight of the polyethylene resin used in Example 5 (polyethylene manufactured by Tosoh Corp., grade name: 08S55A) was used as the raw polyethylene resin (I). The properties of the obtained foamed blow molded article are presented in Table 2 and Table 3.

Example 7

A foamed blow molded article was obtained in the same manner as in Example 1, except that the recycled polyethylene resin used in Example 6 was used as the raw polyethylene resin (I). The properties of the obtained foamed blow molded article are presented in Table 2 and Table 3.

Example 8

A foamed blow molded article was obtained in the same manner as in Example 1, except that the recycled polyethylene resin used in Example 6 was used as the raw polyethylene resin (I), and a resin mixture prepared by mixing 90% by weight of this recycled polyethylene resin and 10% by weight of a low-density polyethylene resin, manufactured by Nihon Unica Corp., grade name: NUC8008; density: 0.917 g/cm$^3$, MFR: 4.7 g/10 min, MT: 6.2 cN, and melting point: 107°C, was used. The properties of the obtained foamed blow molded article are presented in Table 2 and Table 3.

Example 9

A foamed blow molded article was obtained in the same manner as in Example 1, except that the recycled polyethylene resin used in Example 6 was used as the raw polyethylene resin (I), and a resin mixture prepared by mixing 90% by weight of this recycled polyethylene resin and 10% by weight of a low-density polyethylene resin, manufactured by Sumitomo Chemical Co., Ltd.; density is 0.922 g/cm$^3$, MFR is 0.3 g/10 min, MT is 13.4 cN, and melting point is 109°C, was used. The properties of the obtained foamed blow molded article are presented in Table 2 and Table 3.

Example 10

A foamed blow molded article was obtained in the same manner as in Example 1, except that the recycled polyethylene resin used in Example 6 was used as the raw polyethylene resin (I), and a resin mixture prepared by mixing 85% by weight of this recycled polyethylene resin and 15% by weight of the low-density polyethylene resin used in Example 9 was used. The properties of the obtained foamed blow molded article are presented in Table 2 and Table 3.

Example 11

A foamed blow molded article was obtained in the same manner as in Example 1, except that the recycled polyethylene resin used in Example 6 was used as the raw polyethylene raw resin (I), and a resin mixture prepared by mixing 90% by weight of this recycled polyethylene resin and 10% by weight of a high-density polyethylene resin, "Novatec HD" manufactured by Japan Polyethylene Corp., grade name: HJ560; density is 0.964 g/cm$^3$, MFR is 8.0 g/10 min, MT is 1.2 cN, and one-quarter crystallization time is 43 seconds, was used. The properties of the obtained foamed blow molded article are presented in Table 2 and Table 3.

Example 12

An foamed blow molded article was obtained in the same manner as in Example 1, except that a resin mixture prepared by mixing 70% by weight of a polyethylene resin manufactured by Tosoh Corp. (grade name: 08S55A) and 30% by weight of the low-density polyethylene resin used in Example 9 was used as the raw polyethylene resin (I). The properties of the obtained foamed blow molded article are presented in Table 2 and Table 3.

Example 13

An foamed blow molded article was obtained in the same manner as in Example 1, except that a resin mixture prepared by mixing 30% by weight of a polyethylene resin manufactured by Tosoh Corp. (grade name: 08S55A) and 70% by weight of the polyethylene resin used in Example 11, "Novatec HD" manufactured by Japan Polyethylene Corp., grade name: HJ560, was used as the raw polyethylene resin (I). The properties of the obtained foamed blow molded article are presented in Table 2 and Table 3.

Example 14

A foamed blow molded article was obtained in the same manner as in Example 3 (the polyethylene resin used in Example 3, "Novatec HD" manufactured by Japan Polyethylene Corp., grade name: HJ362N) was used), except that blow molding was performed under the conditions of the maximum temperature of the hollow part and the air blow pressure as indicated in Table 1. The properties of the obtained foamed blow molded article are presented in Table 2 and Table 3.

Example 15

A foamed blow molded article was obtained in the same manner as in Example 3 (the polyethylene resin used in Example 3, "Novatec HD" manufactured by Japan Polyethylene Corp., grade name: HJ362N) was used), except that blow molding was performed under the conditions of the maximum temperature of the hollow part and the air blow pressure as indicated in Table 1. The properties of the obtained foamed blow molded article are presented in Table 2 and Table 3.

Example 16

The polyethylene resin used in Example 3 ("Novatec HD" manufactured by Japan Polyethylene Corp., grade name: HJ362N) was used, and blow molding was performed under the conditions of the maximum temperature of the hollow part as indicated in Table 1. Furthermore, after clamping the molds, air was blown in through the air inlet of the mold, and upon molding the foamed blow molded article, only blow-in was carried out without performing the discharge of air such as in Example 1. Except for these, a foamed blow molded article was obtained in the same manner as in Example 1. The properties of the obtained foamed blow molded article are presented in Table 2 and
Table 3.

Example 17

A foamed blow molded article was obtained in the same manner as in Example 1, except that a polyethylene resin, "Novatec HD", manufactured by Japan Polyethylene Corp. , grade name: HS451; density is 0.954 g/cm$^3$, MFR is 3.0 g/10 min, MT is 3.0 cN, and melting point is 134°C, was used as the polyethylene resin (I). The properties of the obtained foamed blow molded article are presented in Table 2 and Table 3.

Example 18

The foamed blow molded article obtained in Example 16 was pulverized, defoamed and then was pelletized again, and thereby a recycled polyethylene resin was prepared. The properties of this recycled polyethylene resin were as follows: density is 0. 953 g/cm$^3$, MFR is 4.3 g/10 min, MT is 2.2 cN, melting point is 131°C, crystallization temperature is 119.5°C, and one-quarter crystallization time is 60 seconds. A foamed blow molded article was obtained in the same manner as in Example 1, except that a resin mixture prepared by mixing 80% by weight of this recycled polyethylene resin and 20% by weight of the polyethylene resin used in Example 17 ("Novatec HD" manufactured by Japan Polyethylene Corp., grade name: HS451) was used as the polyethylene raw resin (I). The properties of the obtained foamed blow molded article are presented in Table 2 and Table 3.

Comparative Example 1

A foamable resin melt was extruded through a die in the same manner as in Example 1, except that a high-density polyethylene resin, "Novatec HD" manufactured by Japan Polyethylene Corp., grade name: HB333RE; density is 0.951 g/cm$^3$, MFR is 0.3 g/10 min, MT is 8.3 cN, and other properties are presented in Table 1, was used in replacement of the raw polyethylene resin (I). However, a foamed blow molded article could not be obtained. The properties of the resin after extrusion are presented in Table 2.

Comparative Example 2

A foamable resin melt was extruded through a die in the same manner as in Example 1, except that a high-density polyethylene resin ,"Novatec HD" manufactured by Japan Polyethylene Corp., grade name: HJ560, was used in replacement of the raw polyethylene resin (I). However, a foamed blow molded article could not be obtained. The properties of the resin after extrusion are presented in Table 2.

Comparative Example 3

A foamable resin melt was extruded through a die in the same manner as in Example 1, except that a high-density polyethylene resin, "Hi-Zex" manufactured by Prime Polymer Co., Ltd. , grade name: 1108J; density is 0.961 g/cm$^3$, MFR is 8.0 g/10 min, MT is 0.8 cN, and one-quarter crystallization time is as indicated in Table 1, was used in replacement of the raw polyethylene resin (I). However, a foamed blow molded article could not be obtained. The properties of the resin after extrusion are presented in Table 2.

Comparative Example 4

A foamable resin melt was extruded through a die in the same manner as in Example 1, except that a resin mixture prepared by mixing 10% by weight of a polyethylene resin manufactured by Tosoh Corp. (grade name: 08S55A) and 90% by weight of a polyethylene resin , "Novatec HD" manufactured by Japan Polyethylene Corp., grade name: HJ560; density is 0.964 g/cm$^3$, MFR is 8.0 g/10 min, MT is 1.2 cN, and one-quarter crystallization time is 43 seconds, was used as the raw polyethylene resin (I). However, a foamed blow molded article could not be obtained. The properties of the resin after extrusion are presented in Table 2.

The heat insulation properties, the coefficient of variation of thickness (variability of thickness), and the closed cell ratio of the foamed blow molded article were evaluated as described below. The evaluation results are presented in Table 3 and Table 4.

(Heat insulation properties)

Cold air at a temperature of 5°C was allowed to flow through inside a duct (length 1 m, foamed blow molded article) for 30 minutes under an atmosphere at 30°C and 80% RH, at a wind speed of 8 m/sec. At a time point after a lapse of 30 minutes, the temperatures at the inlet and the outlet were measured and evaluated.

Good: The difference between the temperature of the cold air at the inlet and the temperature at the outlet is less than 7°C.

Poor: The difference between the temperature of the cold air at the inlet and the temperature at the outlet is 7°C or more.

(Coefficient of variation of thickness)

The coefficient of variation, Cv (%), is a value determined by the relationship: standard deviation (mm) of the thickness of a foamed blow molded article/average value (mm) of the thickness of the foamed blow molded article $\times$ 100, and is an index representing the degree of variation in the average value. The standard deviation (V) of the thickness of the molded article is determined by the following expression (4):

$$V = \{\Sigma(Ti-Tav)^2 / (n-1)\}^{1/2} \qquad (4)$$

wherein Ti represents the measured value of thickness at each of 18 sites; Tav represents the average thickness; n represents the constant of measurement (specifically, 18); and $\Sigma$ means calculation by adding all of the (Ti-Tav)$^2$ values calculated for the individual measured values. The average thickness Tav is the average value of thickness as described above.

The coefficient of variation (Cv) can be determined by the following expression (5), using the expression (4).

$$Cv (\%) = (V/Tav) \times 100 \qquad (5)$$

(Closed cell ratio)

In regard to the closed cell ratio (percentage of closed cells) for the foam layer of the foamed blow molded article, the closed cell ratio at three sites in total, specifically at the center and near the two ends of the foamed blow molded article, are measured by the following procedure, and an arithmetic mean value thereof is taken as the closed cell ratio.

For the closed cell ratio, a test piece is collected from the foam layer of a foamed blow molded article, and Vx is determined according to (procedure C) of ASTM D2856-70 (re-approved in 1976) and calculated by the following expression (6). Here, as the test piece, use is made of a test piece cut from an area where the cells have not undergone significant deformation (which means an area that is mostly free from the sites where the cells are crushed or largely enlarged). Furthermore, if a test piece having the stipulated volume cannot be cut out, a plurality of test pieces are overlapped to provide the stipulated volume.

$$\text{Closed cell ratio (\%)} = [Vx - Va\,(\rho f/\rho s)] \times 100/[Va - Va\,(\rho f/\rho s)]$$

(6)

Wherein Vx: Actual volume of test piece

(Sum of the volume of closed cell parts and the volume of resin parts) (cm³)

Va: Apparent volume determined from the external dimensions of specimen (cm³)
$\rho f$: Apparent density of test piece (g/cm³)
$\rho s$: Resin density of test piece (g/cm³)

[Table 1]

EP 2 246 175 B1

| (Production conditions) | | | | | | | | | | | | | |
|---|---|---|---|---|---|---|---|---|---|---|---|---|---|
| | Resin composition | | PE resin that satisfies requirements (A) to (D) | | | | | | CO$_2$ injection amount (moles /kg) | Extrusion temperature (°C) | Ejection rate [kg/ (h·cm$^2$) ] | Maximum temperature at hollow part (°C) | Blown air pressure (MPa) |
| | PE resin that satisfies requirements (A) to (D) | Other resin | MT (cN) | MFR (g/10 min) | One-quarter isothermal crystallization time (seconds) | Crystallization temperature (°C) | Melting point (°C) | Total endothermic calorific value(J/g) | | | | | |
| Example 1 | 100 | | 4.5 | 4.5 | 87 | 117.9 | 129.1 | 186 | 0.23 | 142 | 43 | 90 | 0.3 |
| Example 2 | 100 | | 2.9 | 5.4 | 84 | 118.2 | 129.3 | 186 | 0.23 | 142 | 43 | 90 | 0.3 |
| Example 3 | 100 | | 2.0 | 5.0 | 92 | 119.0 | 129.3 | 204 | 0.23 | 138 | 43 | 90 | 0.3 |
| Example 4 | 100 | | 1.9 | 5.2 | 90 | 119.3 | 129.4 | 204 | 0.23 | 138 | 43 | 90 | 0.3 |
| Example 5 | 100 | | 9.1 | 3.6 | 94 | 115.1 | 125.4 | 185 | 0.23 | 140 | 43 | 90 | 0.3 |
| Example 6 | 100 | | 8.7 | 3.9 | 91 | 115.4 | 125.6 | 185 | 0.23 | 140 | 43 | 90 | 0.3 |
| Example 7 | 100 | | 8.4 | 4.2 | 90 | 115.5 | 125.6 | 185 | 0.23 | 140 | 43 | 90 | 0.3 |
| Example 8 | 90 | LDPE/10 | 8.4 | 4.2 | 90 | 115.5 | 125.6 | 185 | 0.23 | 138 | 43 | 90 | 0.3 |
| Example 9 | 90 | LDPE/10 | 8.4 | 4.2 | 90 | 115.5 | 125.6 | 185 | 0.23 | 138 | 43 | 90 | 0.3 |
| Example 10 | 85 | LDPE/15 | 8.4 | 4.2 | 90 | 115.5 | 125.6 | 185 | 0.23 | 138 | 43 | 90 | 0.3 |
| Example 11 | 90 | HDPE/10 | 8.4 | 4.2 | 90 | 115.5 | 125.6 | 185 | 0.23 | 140 | 43 | 90 | 0.3 |
| Example 12 | 70 | LDPE/30 | 9.1 | 3.6 | 94 | 115.1 | 125.4 | 185 | 0.27 | 138 | 43 | 90 | 0.4 |
| Example 13 | 30 | HDPE/70 | 9.1 | 3.6 | 94 | 115.1 | 125.4 | 185 | 0.23 | 142 | 43 | 90 | 0.3 |
| Example 14 | 100 | | 2.0 | 5.0 | 92 | 119.0 | 129.3 | 204 | 0.23 | 138 | 43 | 100 | 0.1 |
| Example 15 | 100 | | 2.0 | 5.0 | 92 | 119.0 | 129.3 | 204 | 0.23 | 138 | 43 | 80 | 0.5 |
| Example 16 | 100 | | 2.0 | 5.0 | 92 | 119.0 | 129.3 | 204 | 0.23 | 138 | 43 | 120 | 0.3 |
| Example 17 | 100 | | 3.0 | 3.0 | 64 | 119.1 | 131.2 | 206 | 0.23 | 142 | 43 | 90 | 0.3 |
| Example 18 | 100 | | 2.4 | 3.9 | 61 | 119.4 | 131.4 | 206 | 0.23 | 142 | 43 | 90 | 0.3 |
| Comparative Example 1 | | 100 | 8.3 | 0.3 | 115 | 118.8 | 129.2 | 198 | 0.23 | 138 | 43 | 90 | 0.3 |
| Comparative Example 2 | | 100 | 1.2 | 8.0 | 43 | 120.0 | 131.7 | 218 | 0.23 | 140 | 43 | 90 | 0.3 |
| Comparative Example 3 | | 100 | 0.8 | 8.0 | 68 | 119.5 | 129.7 | 220 | 0.23 | 140 | 43 | 90 | 0.3 |

(continued)

(Production conditions)

| | Resin composition | | | | PE resin that satisfies requirements (A) to (D) | | | | | Extrusion temperature (°C) | Ejection rate [kg/(h·cm²)] | Maximum temperature at hollow part (°C) | Blown air pressure (MPa) |
|---|---|---|---|---|---|---|---|---|---|---|---|---|---|
| | PE resin that satisfies requirements (A) to (D) | Other resin | MT (cN) | MFR (g/10 min) | One-quarter isothermal crystallization time (seconds) | Crystallization temperature (°C) | Melting point (°C) | Total endothermic calorific value (J/g) | $CO_2$ injection amount (moles/kg) | | | | |
| Comparative Example 4 | 10 | HDPE/90 | 9.1 | 3.6 | 94 | 115.1 | 125.4 | 185 | 0.23 | 142 | 43 | 90 | 0.3 |

In regard to Comparative Examples 1 to 3, the properties of the other PE used are described in Table 1.

[Table 2]

| (Resin that composes the foam layer of foamed molded article) | | | | | | |
|---|---|---|---|---|---|---|
| | MT (cN) | MFR (g/10 min) | One-quarter crystallization time (seconds) | Crystallization temperature (°C) | Melting point (°C) | Total endothermic calorific value (J/g) |
| Example 1 | 2.2 | 5.9 | 83 | 118.3 | 129.3 | 186 |
| Example 2 | 2.1 | 6.1 | 80 | 118.6 | 129.5 | 186 |
| Example 3 | 1.8 | 5.4 | 89 | 119.4 | 129.4 | 204 |
| Example 4 | 1.7 | 5.7 | 87 | 119.7 | 129.5 | 204 |
| Example 5 | 8.4 | 4.2 | 90 | 115.5 | 125.6 | 185 |
| Example 6 | 6.0 | 4.7 | 87 | 115.8 | 125.8 | 185 |
| Example 7 | 5.0 | 5.0 | 88 | 115.9 | 125.9 | 185 |
| Example 8 | 5.2 | 4.9 | 205 | 116.2 | 124.9 | 181 |
| Example 9 | 5.8 | 3.8 | 168 | 116.1 | 124.8 | 179 |
| Example 10 | 6.3 | 3.1 | 180 | 115.9 | 124.7 | 177 |
| Example 11 | 5.0 | 5.6 | 144 | 117.7 | 126.5 | 195 |
| Example 12 | 5.5 | 2.4 | 220 | 115.0 | 124.1 | 155 |
| Example 13 | 3.3 | 5.6 | 64 | 120.8 | 132.2 | 207 |
| Example 14 | 1.8 | 5.4 | 89 | 119.4 | 129.4 | 204 |
| Example 15 | 1.8 | 5.4 | 89 | 119.4 | 129.4 | 204 |
| Example 16 | 1.8 | 5.4 | 89 | 119.4 | 129.4 | 204 |
| Example 17 | 2.2 | 4.3 | 60 | 119.5 | 131.4 | 206 |
| Example 18 | 1.9 | 5.8 | 57 | 119.8 | 131.6 | 206 |
| Comparative Example 1 | 7.6 | 0.6 | 111 | 119.2 | 129.4 | 198 |
| Comparative Example 2 | 0.8 | 8.5 | 39 | 120.4 | 131.9 | 218 |
| Comparative Example 3 | 0.5 | 8.6 | 64 | 119.9 | 129.9 | 220 |
| Comparative Example 4 | 1.1 | 7.4 | 42 | 120.5 | 131.7 | 215 |

[Table 3]

| (Foamed molded article) | | | | | | | | |
|---|---|---|---|---|---|---|---|---|
| | Apparent density (g/cm$^3$) | Average thickness (mm) | Closed cell ratio (%) | Average cell diameter (a) mm | Average cell diameter (b) mm | Average cell diameter (c) mm | Cell diameter ratio (a/b) | Cell diameter ratio (a/c) |
| Example 1 | 0.24 | 4.0 | 71 | 0.67 | 1.00 | 0.93 | 0.67 | 0.72 |
| Example 2 | 0.26 | 4.0 | 66 | 0.45 | 0.60 | 0.68 | 0.75 | 0.66 |
| Example 3 | 0.30 | 3.0 | 67 | 0.44 | 0.50 | 0.72 | 0.88 | 0.61 |

(continued)

| (Foamed molded article) | | | | | | | | |
|---|---|---|---|---|---|---|---|---|
| | Apparent density (g/cm³) | Average thickness (mm) | Closed cell ratio (%) | Average cell diameter (a) mm | Average cell diameter (b) mm | Average cell diameter (c) mm | Cell diameter ratio (a/b) | Cell diameter ratio (a/c) |
| Example 4 | 0.31 | 3.0 | 64 | 0.38 | 0.50 | 0.69 | 0.76 | 0.55 |
| Example 5 | 0.21 | 4.0 | 82 | 0.45 | 1.22 | 0.56 | 0.37 | 0.80 |
| Example 6 | 0.23 | 4.0 | 75 | 0.45 | 1.22 | 0.62 | 0.37 | 0.73 |
| Example 7 | 0.26 | 2.0 | 68 | 0.58 | 1.00 | 0.94 | 0.58 | 0.62 |
| Example 8 | 0.28 | 2.2 | 78 | 0.45 | 0.96 | 0.90 | 0.47 | 0.50 |
| Example 9 | 0.23 | 3.0 | 80 | 0.55 | 0.96 | 0.92 | 0.57 | 0.60 |
| Example 10 | 0.22 | 3.0 | 82 | 0.62 | 0.98 | 0.88 | 0.63 | 0.70 |
| Example 11 | 0.25 | 3.0 | 72 | 0.47 | 0.92 | 0.89 | 0.51 | 0.53 |
| Example 12 | 0.15 | 3.0 | 85 | 0.84 | 1.72 | 1.62 | 0.49 | 0.52 |
| Example 13 | 0.22 | 3.5 | 78 | 0.62 | 0.86 | 0.82 | 0.72 | 0.76 |
| Example 14 | 0.22 | 5.0 | 64 | 0.78 | 0.62 | 0.74 | 1.26 | 1.05 |
| Example 15 | 0.37 | 2.4 | 70 | 0.43 | 1.30 | 1.18 | 0.33 | 0.36 |
| Example 16 | 0.44 | 2.0 | 66 | 0.37 | 1.32 | 1.09 | 0.28 | 0.34 |
| Example 17 | 0.25 | 3.0 | 72 | 0.52 | 0.92 | 0.84 | 0.57 | 0.62 |
| Example 18 | 0.26 | 3.0 | 70 | 0.56 | 0.94 | 0.91 | 0.60 | 0.62 |
| Comparative Example 1 | - | - | - | - | - | - | - | - |
| Comparative Example 2 | - | - | - | - | - | - | - | - |
| Comparative Example 3 | - | - | - | - | - | - | - | - |
| Comparative Example 4 | - | - | - | - | - | - | - | - |

[Table 4]

| (Evaluation of foamed blow molded article) | | | |
|---|---|---|---|
| | Dimensional change rate upon heating (%) | Heat insulation properties | Cv value (%) |
| Example 1 | 3.4 | good | 20 |
| Example 2 | 3.6 | good | 26 |
| Example 3 | 3.4 | good | 46 |
| Example 4 | 3.5 | good | 48 |
| Example 5 | 3.3 | good | 18 |
| Example 6 | 3.4 | good | 24 |
| Example 7 | 3.6 | good | 32 |
| Example 8 | 4.1 | good | 22 |
| Example 9 | 4.1 | good | 24 |

(continued)

| (Evaluation of foamed blow molded article) | | | |
|---|---|---|---|
| | Dimensional change rate upon heating (%) | Heat insulation properties | Cv value (%) |
| Example 10 | 4.3 | good | 21 |
| Example 11 | 3.3 | good | 32 |
| Example 12 | 5.8 | poor | 30 |
| Example 13 | 3.0 | good | 30 |
| Example 14 | 3.5 | good | 52 |
| Example 15 | 3.4 | good | 42 |
| Example 16 | 3.4 | good | 58 |
| Example 17 | 3.6 | good | 35 |
| Example 18 | 3.6 | good | 39 |
| Comparative Example 1 | - | - | - |
| Comparative Example 2 | - | - | - |
| Comparative Example 3 | - | - | - |
| Comparative Example 4 | - | - | - |

The foamed blow molded article according to the present invention is particularly useful in the ducts for air regulation in automobiles, and is also useful in warm-keeping and cold-keeping containers, electronic appliance parts, automobiles parts, buffering materials members, floats, and the like.

**Claims**

1. A polyethylene resin foamed blow molded article obtained by extruding a foamable resin melt containing a physical blowing agent through a die to form a foamed parison, subsequently inserting the foamed parison in a mold, and blow molding the foamed parison,

the foamed blow molded article having a foam layer having an apparent density of 0.1 g/cm$^3$ or more to less than 0.7 g/cm$^3$,

wherein the resin composing the foam layer of the foamed blow molded article is:

(a) a polyethylene resin having a density of 0.935 g/cm$^3$ or more,
(b) having a melt tension of 0.7 cN or more at 190°C,
(c) having a melt flow rate (MFR) of 1 g/10 min or more as measured at 190°C under a load of 2.16 kg, **characterized by**
(d) having an one-quarter isothermal crystallization time of 40 seconds or longer, which is defined as the time required that an exothermic calorific value due to isothermal crystallization by following measurement condition (I) becomes equal to one-quarter of a total endothermic calorific value by following measurement condition (II);

wherein in the measurement condition (I) the exothermic calorific value is determined from a differential scanning calorimetry (DSC) curve representing isothermal crystallization by a heat flux DSC method ,which is measured by heating the resin composing the foam layer from 23°C to 160°C at a heating rate of 10°C/min, maintaining the resin at 160°C for 3 minutes, subsequently cooling the resin down to a temperature equal to crystallization temperature of the resin + 3°C at a cooling rate of 50°C/min, and subjecting the resin to isothermal crystallization under the temperature conditions of crystallization temperature + 3°C;
and in the measurement condition (II) the total endothermic calorific value is determined from a DSC curve produced upon measurement of the heat of fusion, which is measured by heating the resin composing the foam layer again from 23°C to 200°C at a heating rate of 10°C/min, after heat treatment of heating the resin from 23°C to 200°C at a heating rate of 10°C/min, and subsequently cooling the resin from 200°C to 23°C at a cooling rate of 10°C/min.

**2.** The polyethylene resin foamed blow molded article according to claim 1, wherein the dimensional change rate upon heating of the foamed blow molded article, obtained by the measurement of dimensional change upon heating under the conditions at 120°C according to JIS K6767 (1999), is 5% or less.

**3.** The polyethylene resin foamed blow molded article according to claim 1, wherein the total endothermic calorific value of the resin of the foam layer of the foamed blow molded article is 160 to 220 J/g.

**4.** The polyethylene resin foamed blow molded article according to claim 1, wherein a closed cell ratio of the foam layer of the foamed blow molded article is 60% or more.

**5.** The polyethylene resin foamed blow molded article according to claim 1, wherein the coefficient of variation, Cv (%), of the thickness of the foamed blow molded article is 60% or less.

**Patentansprüche**

**1.** Ein geschäumter, blasgeformter Polyethylenharzartikel, erhalten durch Extrudieren einer schäumbaren Kunstharzschmelze enthaltend ein physikalisches Treibmittel durch eine Düse, um ein geschäumtes Extrudat zu bilden, anschließend Einsetzen des geschäumten Extrudats in eine Form, und Blasformen des geschäumten Extrudats, wobei der geschäumte, blasgeformte Artikel eine Schaumschicht mit einer Rohdichte von 0,1 g/cm$^3$ oder mehr bis zu weniger als 0,7 g/cm$^3$ aufweist,

bei dem das die Schaumschicht bildende Harz des geschäumten, blasgeformten Artikels

(a) ein Polyethylen-Harz mit einer Dichte von 0,935 g/cm$^3$ oder mehr,
(b) mit einer Schmelzspannung von 0,7 cN oder mehr bei 190°C,
(c) mit einer Schmelzflussrate (MFR) von 1 g/10 min oder mehr, gemessen bei 190°C unter einer Last von 2,16 kg,
ist,
**dadurch gekennzeichnet, dass**
(d) es eine isotherme ein-Viertel Kristallisationszeit von 40 Sekunden oder mehr aufweist, welche als die Zeit definiert ist, die benötigt wird, damit ein exothermer kalorischer Wert aufgrund von isothermer Kristallisation bei folgenden Messbedingungen (I) gleich einem Viertel eines gesamten endothermen kalorischen Wertes bei folgenden Messbedingungen (II) wird;

worin in den Messbedingungen (I) der exotherme kalorische Wert aus einer Differential-Scanning-Kalorimetrie (DSC)-Kurve bestimmt wird, die die isotherme Kristallisation durch ein Wärmestromdichte-DSC-Verfahren darstellt, welches gemessen wird, indem das Harz, das die Schaumschicht bildet, von 23°C auf 160°C mit einer Heizrate von 10°C/min erhitzt wird, das Harz für 3 Minuten auf 160°C gehalten wird, anschließend das Harz auf eine Temperatur gleich der Kristallisationstemperatur des Harzes +3°C bei einer Kühlungsrate von 50°C/min abgekühlt wird, und das Harz einer isothermen Kristallisation unter den Temperaturbedingungen der Kristallisationstemperatur +3°C ausgesetzt wird;
und in den Messbedingungen (II) der gesamte endotherme kalorische Wert aus einer DSC-Kurve bestimmt wird, die bei der Messung der Schmelztemperatur produziert wird, welche durch erneutes Erhitzen des Harzes, der die Schaumschicht bildet, von 23°C auf 200°C mit einer Heizrate von 10°C/min gemessen wird, nach Wärmebehandlung eines Erhitzens des Harzes von 23°C auf 200°C bei einer Heizrate von 10°C/min, und anschließendem Abkühlen des Harzes von 200°C auf 23° bei einer Kühlungsrate von 10°C/min.

**2.** Der geschäumte, blasgeformte Polyethylenharzartikel nach Anspruch 1, wobei die Formänderungsrate bei der Erwärmung des geschäumten, blasgeformten Polyethylenharzartikels, gewonnen durch die Messung der Dimensionsänderung bei Erwärmung unter den Bedingungen bei 120°C gemäß JIS K6767 (1999), 5 % oder weniger beträgt.

**3.** Der geschäumte, blasgeformte Polyethylenharzartikel nach Anspruch 1, wobei der gesamte endotherme kalorische Wert des Harzes der Schaumschicht des geschäumten, blasgeformten Polyethylenharzartikels 160 bis 220 J/g beträgt.

**4.** Der geschäumte, blasgeformte Polyethylenharzartikel nach Anspruch 1, wobei der Anteil geschlossener Zellen der Schaumschicht des geschäumten, blasgeformten Polyethylenharzartikels 60 % oder mehr beträgt.

**5.** Der geschäumte, blasgeformte Polyethylenharzartikel nach Anspruch 1, wobei der Abweichungskoeffizient, Cv (%), der Dicke des geschäumten, blasgeformten Polyethylenharzartikels 60 % oder weniger beträgt.

**Revendications**

**1.** Article moulé par soufflage en mousse de résine de polyéthylène obtenu par extrusion d'une matière fondue expansible en résine contenant un agent d'expansion physique à travers une matrice pour former une paraison en mousse, suivie par une insertion de la paraison en mousse dans un moule, et moulage par soufflage de la paraison en mousse,
l'article moulé par soufflage en mousse présentant une couche de mousse avec une densité apparente de $0,1$ g/cm$^3$ ou plus à moins de $0,7$ g/cm$^3$,
dans lequel la résine composant la couche de mousse de l'article moulé par soufflage en mousse est:

(a) une résine de polyéthylène présentant une densité de $0,935$ g/cm$^3$ ou plus,
(b) avec une tension de matière fondue de $0,7$ cN ou plus à 190°C,
(c) avec un indice de fluidité (MFR=*melt flow* rate) de 1 g/10 min ou plus tel que mesuré à 190°C sous une charge de 2,16 kg
**caractérisé par**
(d) ayant une durée de cristallisation isothermique d'un quart, durant 40 secondes ou plus, laquelle est définie comme le temps requis pour qu'une valeur calorifique exothermique due à la cristallisation isothermique par la condition de mesure suivante (I) devienne égale à un quart de la valeur calorifique endothermique totale par la condition de mesure suivante (II);

dans lequel, dans la condition de mesure (I), la valeur calorifique exothermique est déterminée à partir d'une courbe de calorimétrie à balayage différentiel (DSC) représentant la cristallisation isothermique par un procédé de DSC à flux thermique, qui est mesurée par chauffage de la résine composant la couche de mousse de 23°C à 160°C à une vitesse de chauffe de 10°C/min, le fait de maintenir la résine à 160°C pendant 3 minutes, le refroidissement ensuite de la résine jusqu'à une température égale à la température de cristallisation de la résine +3°C à une vitesse de refroidissement de 50°C/min, et la soumission de la résine à une cristallisation isothermique dans les conditions de température de la température de cristallisation +3°C; et, dans la condition de mesure (II), la valeur calorifique endothermique totale est déterminée sur base d'une courbe de DSC produite lors de la mesure de la chaleur de fusion, laquelle est mesurée par chauffage de la résine composant la couche de mousse une fois encore de 23°C à 200°C à une vitesse de chauffe de 10°C/min, après traitement thermique de chauffage de la résine de 23°C à 200°C à une vitesse de chauffe de 10°C/min, et ensuite refroidissement de la résine de 200°C à 23°C à une vitesse de refroidissement de 10°C/min.

**2.** Article moulé par soufflage en mousse de résine de polyéthylène selon la revendication 1, dans lequel la vitesse de changement dimensionnel lors de la chauffe de l'article moulé par soufflage en mousse, obtenue par la mesure du changement dimensionnel lors de la chauffe dans les conditions à 120°C selon JIS K6767 (1999), est de 5% ou moins.

**3.** Article moulé par soufflage en mousse de résine de polyéthylène selon la revendication 1, dans lequel la valeur calorifique endothermique totale de la résine de la couche de mousse de l'article moulé par soufflage en mousse va de 160 à 220 J/g.

**4.** Article moulé par soufflage en mousse de résine de polyéthylène selon la revendication 1, dans lequel un ratio d'alvéoles fermées de la couche de mousse de l'article moulé par soufflage en mousse est de 60% ou plus.

**5.** Article moulé par soufflage en mousse de résine de polyéthylène selon la revendication 1, dans lequel le coefficient de variation, Cv (%), de l'épaisseur de l'article moulé par soufflage en mousse, est de 60% ou moins.

FIG. 1

1. Foam layer
2. Foamed parison
3. Molds
4. Blowing nozzle

6. Decompression pipe
7. Accumulator
8. Non-expanded thermoplastic resin layer

FIG. 2

FIG. 3

FIG. 4

**EP 2 246 175 B1**

**Patent documents cited in the description**

- EP 1449634 A
- JP 4084209 B
- JP 2001527106 A
- JP 2006096910 A
- JP 2008222818 A